Europäisches Patentamt

European Patent Office

Office européen des brevets

(11) Publication number: **0 037 216**
**B1**

(12) **EUROPEAN PATENT SPECIFICATION**

(45) Date of publication of patent specification: **28.11.84**

(21) Application number: **81301176.4**

(22) Date of filing: **19.03.81**

(51) Int. Cl.³: **G 06 K 1/12**

(54) **Bar code printer.**

(30) Priority: **31.03.80 US 135818**

(43) Date of publication of application:
**07.10.81 Bulletin 81/40**

(45) Publication of the grant of the patent:
**28.11.84 Bulletin 84/48**

(84) Designated Contracting States:
**DE FR GB**

(56) References cited:
**US-A-3 736 867**
**US-A-3 769 906**
**US-A-3 924 532**

(73) Proprietor: **NCR CANADA LTD - NCR CANADA LTEE**
**6865 Century Avenue**
**Mississauga Ontario, L5N 2E2 (CA)**

(72) Inventor: **Nally, Robert Blaize**
**72 Norman Street**
**Waterloo Ontario (CA)**

(74) Representative: **Robinson, Robert George**
**International Patent Department NCR Limited**
**206 Marylebone Road**
**London NW1 6LY (GB)**

Courier Press, Leamington Spa, England.

## Description

### Technical Field

The present invention is directed to a bar code printer. Such printers may be employed for the printing of a bar code on the back of a bank cheque or similar document for use in processing the document.

### Background Art

As disclosed in the co-pending European Patent Application No. 79302258.3 (EP—A—0 011 388) entitled "Document Processing System" modern cheque processing systems include the listing and balancing of amounts for use in proving the documents, encoding information on a cheque for use in distributing the cheques, endorsing, microfilming, sorting and distributing the cheques in accordance with their final destination. As a further part of such processing system, information is printed on the back of the cheque which includes a document identification number (DIN) which may comprise the account number of the writer of the cheque, the date, the processing operator I.D., the identification of the processing machine and any other information necessary for processing the cheque.

Prior processing systems have employed magnetic printers and readers, together with optical character recognition apparatus for reading such machine-printed characters. The cost of such a processing apparatus is considerable. In order to reduce the overall cost of such processing apparatus, it has been proposed to use a bar code printer for printing the DIN number on the document with a bar representing a binary 1 and a space representing a binary 0 in a manner that is well-known in the art.

A printer for printing codes on articles is disclosed in US Patent No. 3 769 906. This printer incorporates a printing drum having a plurality of character carrying printing levers pivotally mounted around its periphery for movement between a printing and a retracted or idling position, driving means for rotating the drum and actuating means for effecting movement of the levers. As the drum rotates, an ejector roller successively moves each printing lever to its printing positions against the action of a spring. An electromagnetically operated selector is arranged to actuate latches for holding selected printing levers in their printing position, while the remaining levers are retracted by their springs upon passage of the roller. At the end of a printing cycle, a retraction or cancelling roller is arranged to deactivate the latches allowing the levers to return to their idling position.

Another code printer is disclosed in US Patent No. 3 736 867 in which a plurality of code bar means are slidably mounted on a bed and are manually movable between a first non-printing and second and third printing positions.

### Disclosure of the Invention

It is an object of the present invention to provide a printer for printing bar codes which is compact, simple in construction and therefore low in cost.

Thus, according to the invention, there is provided an apparatus for printing a bar code on a record member, including a drum which carries a plurality of printing members spaced around its periphery and which is rotatable to successively bring each printing member to a printing station, said printing members being arranged to be selectively movable by actuating means between a printing and a non-printing position such that, when a printing member is brought to said printing station, a bar is either printed or not, depending on whether said printing member is in its printing or non-printing position, characterized in that said printing members are elongated and extend parallel to, and are slidably movable parallel to, the rotational axis of said drum, said actuating means being arranged to engage a radially outwardly extending arm portion of a printing member thereby to move, when operated, said printing member between its printing and its non-printing position, and further characterized by a stepping motor for rotating said drum stepwise to successively bring said arm portion of each of said printing members into a position in which said arm portion is engageable by said actuating means.

An additional advantage of the bar code printer according to the present invention is that it operates at high speed.

### Brief Description of the Drawings

Embodiments of the invention will now be described, by way of example, with reference to the accompanying drawings, in which

Fig. 1 is a perspective view of one embodiment of the bar code printer according to the invention showing an actuator means located at a printing station;

Fig. 2 is a side view of the bar code printer of Fig. 1 with a portion cut away showing details of a printing element and its engagement by the actuator means;

Fig. 3 is a modified embodiment of the bar code printer of Fig. 1 taken generally on line III—III of Fig. 2 showing a sectional end view in which the actuator means is positioned 180° from the printing station; and

Fig. 4 is a block diagram of a control circuit for controlling the operation of the bar code printer.

### Best Mode for Carrying Out the Invention

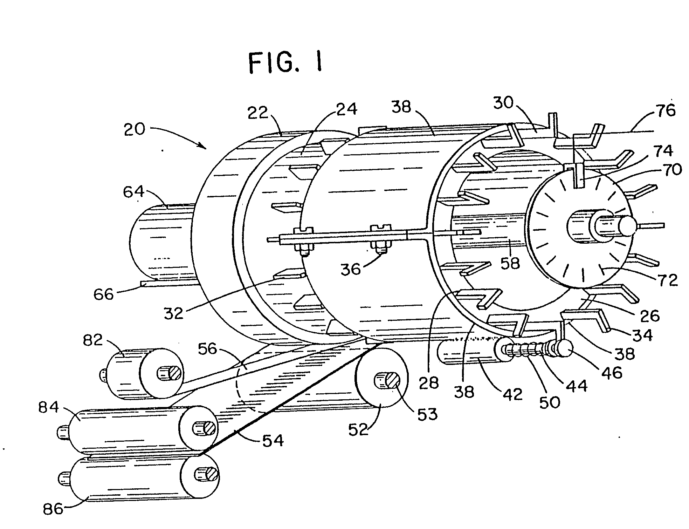

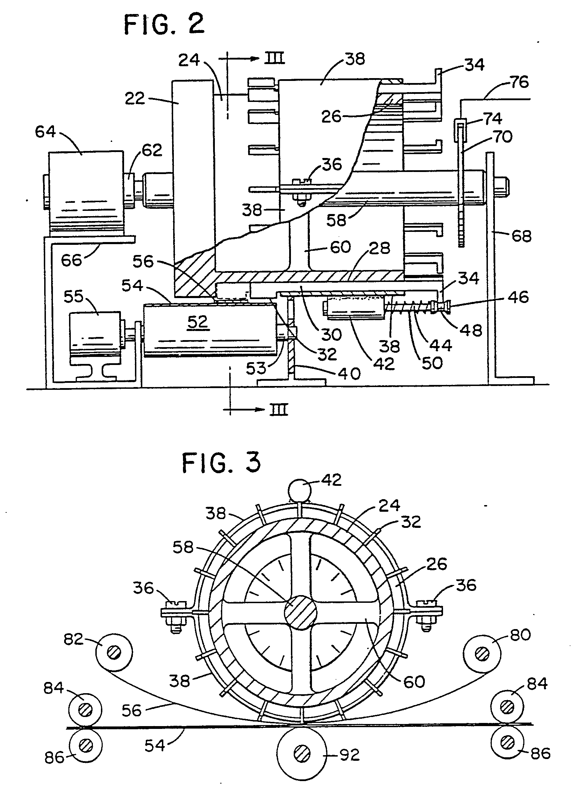

Referring now to Fig. 1, there is shown a perspective view of one embodiment of the bar code printer generally indicated by the numeral 20 and which includes a cylinder shaped drum member 22 having a recessed portion 24 and a front portion 26 having a plurality of slots 28 therein (Fig. 2) extending parallel to the rotational axis of the drum member 22 and spaced around the peripheral edge of the front portion 26. Slidably positioned in each of the slots 28 is an elongated printing member 30, one end of which comprises a bar printing element 32 while the opposite end comprises a radially outwardly extending arm portion 34.

The front portion 26 of the drum member 22 is mounted within a pair of outer shell members 38 which are secured together by means of bolts 36. As better shown in Fig. 2, the lower shell 38 is secured to a supporting bracket 40 located within the framework of the cheque processing apparatus. Secured to one of the shell members 38 adjacent the arm portions 34 of the printing members 30 is a solenoid member 42 whose armature 44 extends in a direction parallel to the printing member 30. The end portion 46 of the armature member 44 has a recessed portion 48 within which is positioned the end of the arm portion 34 of one of the printing members 30. As will be described more fully hereinafter, energizing of the solenoid 42 results in the inward movement of the armature member 44 against the action of a compression spring 50. This inward movement of the armature member 44 will move the engaged printing member 30 in a similar direction to position the bar printing element 32 thereof adjacent a printing platen comprising an eccentric roller 52 (Figs. 1 and 2) secured to a shaft 53 which is journalled on the support brackets 40 and a companion bracket 66 and which is connected to a motor 55. Rotation of the roller 52 results in such roller moving a document 54 against an ink ribbon 56 and towards the positioned bar printing element 32 to print a bar on the face of the document 54. Upon deenergizing of the solenoid member 42, the spring 50 will return the armature member 44 and the printing member 30 to the home position where the element 32 of such member 30 is positioned free and clear of document 54 engagement.

The drum member 22 is secured to a shaft 58 (Figs. 1—3 inclusive) by means of rib members 60 (Figs. 2 and 3). One end of the shaft 58 is secured to the drive shaft 62 of a motor member 64 mounted on the support bracket 66. The motor member 64 is of the type known as a stepping motor in which the motor will rotate the drum member 22 a predetermined distance when energized. In the present embodiment, the operation of the motor member 64 will rotate the drum member 22 to position in succession the end of the arm portion 34 of each of the printing members 30 within the recessed portion 48 of the armature member 44 for enabling the solenoid 42 to selectively move the printing elements 30 from home and to the position for printing a bar on the document 54. The other end of the shaft 58 is rotatably supported by a bracket 68 (Fig. 2) and has secured thereto a timing disc 70 on which is located a plurality of magnetic elements 72 (Fig. 1) and which disc 70 is associated with a pick-up member 74 for sensing the location of the shaft 58 and the drum member 22 in a manner that is well-known in the art. Signals generated by the pick-up member 74 are transmitted over a line 76 to a control unit 78 (Fig. 5) which employs the signals to control the energizing of the solenoid member 42 in a manner that will be described more fully hereinafter.

Associated with the bar code printer 20 (Fig. 1) is the inking ribbon 56 which is positioned adjacent the recessed portion 24 of the drum member 22 and which is driven by a take-up spool 80 (Fig. 3) from a supply spool 82. Located adjacent the inking ribbon 56 is the document 54 on which the printing of the bars is to take place. The document 54, which in the present embodiment is a bank cheque, is driven past the drum member 22 by a pair of drive rollers 84 coacting with associated pressure rollers 86 (Fig. 3) in a manner that is well-known in the art.

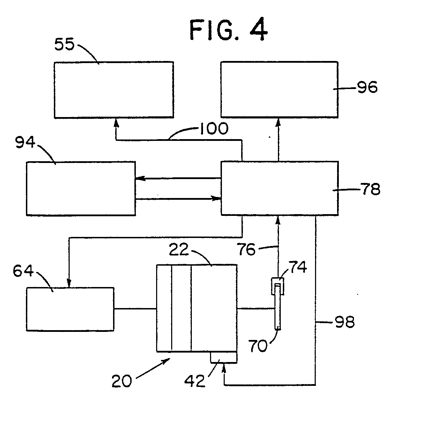

Referring now to Fig. 4, there is shown a block diagram of the control circuit employed in the present embodiment for operating the bar code printer 20. Included in this circuit is the control unit 78 which receives binary data from a data input device 94 which, in the present embodiment, may include a keyboard device into which the operator will insert the data which is to be printed on the cheque. In response to the signals received over line 76 from the pick-up member 74, indicating the location of the drum member 22 with respect to the solenoid member 42, the control unit 78 will output energizing pulses to a cheque drive unit 96 which controls the operation of the drive rollers 84 (Fig. 3) to move the cheque 54 to a printing position adjacent the recessed portion 24 of the drum member 22. At this time, the drum member 22 is located to position the end of the arm portion 34 of one of the printing members 30 within the recessed portion 48 of the armature member 44. If a bar is to be printed on the cheque 54 representing a binary 1, the control unit 78 will generate an energizing pulse over line 98 (Fig. 5) to the solenoid member 42 enabling the solenoid member to move the aligned printing member 30 so as to position the bar printing element 32 thereof adjacent the inking ribbon 56 and the document 54. The control unit 78 will then transmit an energizing pulse over line 100 to the motor 55 (Fig. 2) which will rotate the eccentric roller member 52 through one revolution resulting in the printing by the element 32 of a bar on the document 54. If a space representing a binary 0 is required at this time, the control unit 78 will operate the motor 64 which rotates the drum member 22 a distance to pass by such aligned printing member 30 so as to position the end of the arm portion 34 of the next printing member 30 within the recessed portion 48 of the armature member 44 in preparation for the next printing cycle.

Referring now to Fig. 3, there is shown a second embodiment of the unique bar code printer in which the solenoid member 42 is located 180° from a pressure roller 92 similar to the roller member 52. This construction eliminates the need for a separate motor drive for the pressure roller 92 and for the document drive rollers 84. The pressure roller 92 coacts against the face of the printing bar element 32 to provide the necessary pressure to print the bar on the document 54. In the operation of the bar code printer of Fig. 3, the printing members 30 located between the solenoid member 42 and the pressure roller 92 are positioned in accordance with the data to be printed. In this construction, energizing of the solenoid member 42 positions a printing member 30 to print a coded bar in the manner described previously. While in a printing position, the drum member 22 is rotated a distance to position the solenoid member 42 between adjacent printing members 30 allowing the armature member 44 to be disengaged from the end of the arm portion 34 of the actuated printing member 30. The solenoid member 42 at this time is deenergized, allowing the spring 50 to return the armature member 44 to its home position. The motor 64 is again energized to rotate the drum member 22 to a position enabling the armature member 44 to engage the next printing member 30 in preparation for a printing operation. It will be seen from this arrangement that a number of printing members 30 can be positioned in a printing position prior to the time the first bar is printed on the document 54 by the action of the pressure roller 92 against the inking ribbon 56. This arrangement also allows for the printing of the same information on a number of succeeding documents 54 if this is required. Rotation of the drum member 22 against the pressure roller 92 provides both a printing and driving operation on the document 54 in a manner that is well-known in the art. In order to provide a continuous printing operation of the drum member 22, the position of each of the printing members 30 is stored in a memory in the control unit 78 (Fig. 4) during one revolution of the drum member 22 enabling the control unit 78 to generate the proper energizing signals during the next revolution of the drum member 22 to provide the proper printing of the required data.

**Claims**

1. Apparatus for printing a bar code on a record member (54), including a drum (22) which carries a plurality of printing members (30) spaced around its periphery and which is rotatable to successively bring each printing member (30) to a printing station, said printing members (30) being arranged to be selectively movable by actuating means (42, 44) between a printing and a non-printing position such that, when a printing member (30) is brought to said printing station, a bar is either printed or not, depending on whether said printing member (30) is in its printing or non-printing position, characterised in that said printing members (30) are elongated and extend parallel to, and are slidably movable parallel to, the rotational axis of said drum (22), said actuating means (42, 44) being arranged to engage a radially outwardly extending arm portion (34) of a printing member (30) thereby to move, when operated, said printing member (30) between its printing and its non-printing position, and further characterised by a stepping motor (64) for rotating said drum (22) stepwise to successively bring said arm portion (34) of each of said printing members (30) into a position in which said arm portion (34) is engageable by said actuating means (42, 44).

2. Apparatus according to claim 1, characterised in that said actuating means comprises a solenoid (42) and an armature member (44), and in that said arm portion (34) of each of said printing members (30) is arranged to cooperate with a recessed portion (48) of said armature member (44).

3. Apparatus according to claim 1, characterised in that said actuating means (42, 44) is located adjacent said drum (22) in alignment with said printing station.

4. Apparatus according to claim 1, characterised in that said actuating means (42, 44) is located adjacent said drum (22) off-set to said printing station.

5. Apparatus according to claim 1, characterised by timing means (70) carried by said drum (22), sensing means (74) associated with said timing means (70), and control means (78) responsive to signals generated by said sensing means (74) for controlling the rotation of said drum (22) and the operation of said actuating means (42, 44).

6. Apparatus according to claim 1, characterised by a record member positioning means (52) arranged to move said record member (54) into engagement with an inking member (56) and towards a bar printing portion (32) of a printing member (30) so as to bring about printing of a bar on said record member (54).

7. Apparatus according to claim 6, characterised in that said positioning means is an eccentric roller (52) arranged to rotate through one revolution for the printing of each bar on said record member (54).

8. Apparatus according to claim 5 and 7, characterised in that said control means (78) is also arranged to control rotation of said eccentric roller (52).

**Patentansprüche**

1. Gerät zum Drucken einer Strichcodierung auf einem Aufzeichnungsträger (54) mit einer Trommel (22), die eine Vielzahl von Druckgliedern (30) trägt, die längs ihres Umfangs in Abstand angeordnet sind, und die drehbar ist, um nacheinander jedes Druckglied (30) zu einer Druckstation zu bringen, wobei die Druckglieder (30) angeordnet sind, damit sie selektiv durch Betätigungsmittel (42, 44) zwischen einer druckenden und einer nicht druckenden Stellung bewegbar sind, derart, dass, wenn ein Druckglied (30) zur Druckstation gebracht ist, ein Strich entweder gedruckt wird oder nicht, abhängig davon, ob das Druckglied (30) in seiner druckenden oder nicht druckenden Stellung ist, dadurch gekennzeichnet, dass die Druckglieder (30) länglich ausgebildet sind und sich parallel zur Drehachse der Trommel (22) erstrecken und parallel zu dieser verschiebbar sind, und dass die Betätigungsmittel (42, 44) angeordnet sind, um in Eingriff zu gehen mit einem radial sich nach aussen entstreckenden Armteil (34) eines Druckgliedes (30), wodurch bei Betätigung das Druckglied (30) zwischen seiner druckenden und seiner nichtdruckenden Stellung bewegt wird und ferner gekennzeichnet durch einen Schrittmotor (64) zum schrittweisen Drehen der Trommel (22), um den Armteil (34) jedes der Druckglieder (30) nacheinander in eine Position zu bringen, in der der Armteil (34) mit den Betätigungsmitteln (42, 44) in Eingriff bringbar ist.

2. Einrichtung nach Anspruch 1, dadurch gekennzeichnet, dass die Betätigungsmittel einen Elektromagneten (42) und ein Ankerglied (44) aufweisen, und dass der Armteil (34) jedes der Druckglieder (30) angeordnet ist, um mit einer Ausnehmung (48) in dem Ankerglied (44) zusammenzuarbeiten.

3. Einrichtung nach Anspruch 1, dadurch gekennzeichnet, dass die Betätigungsmittel (42, 44) benachbart zur Trommel (22) in Ausrichtung mit der Druckstation angeordnet sind.

4. Einrichtung nach Anspruch 1, dadurch gekennzeichnet, dass die Betätigungsmittel (42, 44) benachbart zur Trommel (22) und gegenüber der Druckstation versetzt angeordnet sind.

5. Einrichtung nach Anspruch 1, gekennzeichnet durch Zeitgabemittel (70) die auf der Trommel (22) angebracht sind, durch Abfühlmittel (74) die den Zeitgabemitteln (77) zugeordnet sind, und durch Steuermittel (78), die auf Signale ansprechen, die von den Abfühlmitteln (74) erzeugt werden, zur Steuerung der Drehung der Trommel (22) und zur Betätigung der Betätigungsmittel (42, 44).

6. Einrichtung nach Anspruch 1, gekennzeichnet durch eine Aufzeichnungsträger-Positioniervorrichtung (52), die angeordnet ist, um den Aufzeichnungsträger (44) in Anlage mit einem Färbeglied (56) und in Richtung eines Strichdruckteils (52) eines Druckgliedes (30) zu bewegen, um den Druck eines Striches auf dem Aufzeichnungsträger (54) zu bewirken.

7. Einrichtung nach Anspruch 6, dadurch gekennzeichnet, dass die Positioniervorrichtung eine exzentrische Rolle (52) ist, die angeordnet ist, um eine Umdrehung für den Druck jedes Striches auf dem Aufzeichnungsträger (54) zu rotieren.

8. Einrichtung nach Anspruch 5 und 7, dadurch gekennzeichnet, dass die Steuermittel (78) auch angeordnet sind, um die Drehung der exzentrischen Rolle (52) zu steuern.

**Revendications**

1. Appareil d'impression d'un code à bâtonnets sur un élément d'enregistrement (54), comprenant un tambour (22) qui porte plusieurs éléments d'impression (30) espacés à sa périphérie et qui peut tourner pour amener successivement chaque élément (30) d'impression dans un poste d'impression, lesdits éléments (30) d'impression étant disposés pour être déplacés sélectivement par des moyens d'actionnement (42, 44) entre une position d'impression et une position de non-impression telles que, lorsqu'un élément (30) d'impression est amené dans ledit poste d'impression, un bâtonnet soit imprimé ou non, suivant que ledit élément (30) d'impression est dans sa position d'impression ou de non-impression, caractérisé en ce que lesdits éléments (30) d'impression sont allongés et s'étendent parallèlement et peuvent coulisser parallèlement à l'axe de rotation dudit tambour (22), lesdits moyens (42, 44) d'actionnement étant disposés de manière à engager un tronçon (34) de bras, s'étendant radialement vers l'extérieur, d'un élément (30) d'impression afin de déplacer, lorsque mis en oeuvre, ledit élément (30) d'impression entre sa position d'impression et sa position de non-impression, et en outre caractérisé par un moteur pas à pas (64) destiné à faire tourner ledit tambour (22) pas à pas pour amener successivement ledit tronçon (34) de bras de chacun desdits éléments (30) d'impression dans une position dans laquelle ladite partie (34) de bras peut être engagée par lesdits moyens (42, 44) d'actionnement.

2. Appareil selon la revendication 1, caractérisé en ce que lesdits moyens d'actionnement comprennent une bobine (42) et un élément (44) d'armature, et en ce que ledit tronçon (34) de bras de chacun desdits éléments (30) d'impression est disposé pour coopérer avec une partie évidée (48) dudit élément (44) d'armature.

3. Appareil selon la revendication 1, caractérisé en ce que ledit moyen (42, 44) d'actionnement est adjacent audit tambour (22) en alignement avec ledit post d'impression.

4. Appareil selon la revendication 1, caractérisé en ce que ledit moyen d'actionnement (42, 44) est adjacent audit tambour (22) en décalage dudit poste d'impression.

5. Appareil selon la revendication 1, caractérisé par un moyen (70) de synchronisation porté par ledit tambour (22), un moyen (74) de détection associé audit moyen (70) de synchronisation et un moyen (78) de commande qui, en réponse à des signaux générés par ledit moyen (74) de détection, commande la rotation dudit tambour (22) et la mise en oeuvre desdits moyens (42, 44) d'actionnement.

6. Appareil selon la revendication 1, caractérisé par un moyen (52) de positionnement de l'élément d'enregistrement, disposé pour amener ledit élément (54) d'enregistrement en engagement avec un élément encreur (56) et vers une partie (32) d'impression de bâtonnets d'un élément (30) d'impression afin d'effectuer l'impression d'un bâtonnet sur ledit élément (54) d'enregistrement.

7. Appareil selon la revendication 6, caractérisé en ce que ledit moyen de positionnement est un rouleau excentré (52) monté de manière à tourner sur un tour pour l'impression de chaque bâtonnet sur ledit élément (54) d'enregistrement.

8. Appareil selon les revendications 5 et 7, caractérisé en ce que ledit moyen (78) de commande est également conçu pour commander la rotation dudit rouleau excentré (52).

FIG. 1

# FIG. 2

# FIG. 3

# FIG. 4